(19) Europäisches Patentamt
European Patent Office
Office européen des brevets

(11) EP 4 607 843 A1

(12) EUROPEAN PATENT APPLICATION

(43) Date of publication:
27.08.2025 Bulletin 2025/35

(21) Application number: 24218949.6

(22) Date of filing: 11.12.2024

(51) International Patent Classification (IPC):
H04L 9/08 (2006.01)       G06F 17/16 (2006.01)

(52) Cooperative Patent Classification (CPC):
H04L 9/085; G06F 17/16; H04L 2209/46

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.02.2024 CN 202410190882

(71) Applicant: Beijing Volcano Engine Technology
Co., Ltd.
Beijing 100190 (CN)

(72) Inventors:
• ZHANG, Qizhi
  Beijing, 100028 (CN)
• CAI, Quanwei
  Beijing, 100028 (CN)
• HONG, Jue
  Beijing, 100028 (CN)
• WU, Ye
  Beijing, 100028 (CN)

(74) Representative: Isarpatent
Patent- und Rechtsanwälte
Barth Hassa Peckmann & Partner mbB
Friedrichstraße 31
80801 München (DE)

(54) **MATRIX MULTIPLICATION METHOD AND APPARATUS FOR SECURE COMPUTATION, MEDIUM, AND ELECTRONIC DEVICE**

(57)    The present disclosure relates to a data processing method and apparatus for secure computation, a medium, and an electronic device. The method applied to a first participant includes: determining first permutation information and second permutation information according to a target matrix; jointly performing a first round of secure permutation with a second participant at least according to the first permutation information to obtain a first permutation result shard; jointly performing a second round of secure permutation with the second participant according to the first permutation result shard and the second permutation information to obtain a second permutation result shard; generating a first result shard according to the second permutation result shard; and performing a target data processing task based on the first result shard. The communication in the entire computing process is to call a secure permutation protocol in n dimensions twice, and the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be improved.

FIG. 1

The flowchart contains the following steps:

Determining first permutation information and second permutation information according to a target matrix — S101

Jointly performing the first round of secure permutation with the second participant at least according to the first permutation information to obtain the first permutation result shard of the target column vector — S102

Jointly performing the second round of secure permutation with the second participant according to the first permutation result shard and the second permutation information to obtain the second permutation result shard — S103

Generating the first result shard of the product according to the second permutation result shard — S104

Performing a target data processing task based on the first result shard — S105

EP 4 607 843 A1

**Description**

TECHNICAL FIELD

The present disclosure relates to the field of secure multi-party computation, and in particular, to a data processing method and apparatus for secure computation, a medium, and an electronic device.

BACKGROUND

Secure multi-party computation, also known as multi-party secure computation, can compute a function result by multiple parties without disclosing input data of each party in the function, and the computation result is disclosed to one or more parties of them. Typical applications of secure multi-party computation include, for example, joint statistical analysis of multi-party data with privacy protection, machine learning, etc. The function herein is a function of a statistical operation, a machine learning algorithm, and so on.

In the process of multi-party secure computation, in order not to disclose data of each party and intermediate computation results, the data or intermediate results may be held by each party in a shared form. One party holds one data shard, and the shards held by various parties are fused together to restore the corresponding data. Generally, the computation is performed in the shared state. As such, the number of data communications, the communication volume, and the like in the multi-party secure computation are all important factors that affect the efficiency of the secure computation.

SUMMARY

The Summary is provided to introduce concepts in a brief form, and these concepts will be described in detail in the following Detailed Description section. The Summary is not intended to identify key features or essential features of the claimed technical solution, nor is it intended to be used to limit the scope of the claimed technical solution.

In a first aspect, the present disclosure provides a data processing method for secure computation, the secure computation being used for a first participant and a second participant to collaboratively compute a product of an m*n target matrix and an n-dimensional target column vector, each column of the target matrix being an m-dimensional one-hot vector, each row of the target matrix including a non-zero element, $m \leq n$, the target matrix being held by the first participant alone, the target column vector being held by the second participant alone, or the target column vector being in a shared form for the first participant and the second participant, and the method being applied to the first participant and including:

> determining first permutation information and second permutation information according to the target matrix;
> jointly performing a first round of secure permutation with the second participant at least according to the first permutation information to obtain a first permutation result shard of the target column vector;
> jointly performing a second round of secure permutation with the second participant according to the first permutation result shard and the second permutation information to obtain a second permutation result shard;
> generating a first result shard of the product according to the second permutation result shard; and
> performing a target data processing task based on the first result shard.

In a second aspect, the present disclosure provides a data processing method for secure computation, the secure computation being used for a first participant and a second participant to collaboratively compute a product of an m*n target matrix and an n-dimensional target column vector, each column of the target matrix being an m-dimensional one-hot vector, each row of the target matrix including a non-zero element, $m \leq n$, the target matrix being held by the first participant alone, the target column vector being held by the second participant alone, or the target column vector being in a shared form for the first participant and the second participant, and the method being applied to the second participant and including:

> jointly performing a first round of secure permutation with the first participant according to the target column vector or a second shard of the target column vector held by the second participant to obtain a fourth permutation result shard of the target column vector;
> jointly performing a second round of secure permutation with the first participant according to the fourth permutation result shard to obtain a third permutation result shard;
> generating a second result shard of the product according to the third permutation result shard; and
> performing a target data processing task based on the second result shard.

In a third aspect, the present disclosure provides a data processing apparatus for secure computation, the secure computation being used for a first participant and a second participant to collaboratively compute a product of an m*n target matrix and an n-dimensional target column vector, each column of the target matrix being an m-dimensional one-hot vector, each row of the target matrix including a non-zero element, $m \leq n$, the target matrix being held by the first participant alone, the target column vector being held by the second participant alone, or the target column vector being in a shared form for the first participant and the second participant, and the apparatus being applied to the first participant and including:

a first determination module, configured to determine first permutation information and second permutation information according to the target matrix;

a first permutation module, configured to jointly perform a first round of secure permutation with the second participant at least according to the first permutation information to obtain a first permutation result shard of the target column vector;

a second permutation module, configured to jointly perform a second round of secure permutation with the second participant according to the first permutation result shard and the second permutation information to obtain a second permutation result shard;

a first generation module, configured to generate a first result shard of the product according to the second permutation result shard; and

a first execution module, configured to perform a target data processing task based on the first result shard.

In a fourth aspect, the present disclosure provides a data processing apparatus for secure computation, the secure computation being used for a first participant and a second participant to collaboratively compute a product of an m*n target matrix and an n-dimensional target column vector, each column of the target matrix being an m-dimensional one-hot vector, each row of the target matrix including a non-zero element, $m \leq n$, the target matrix being held by the first participant alone, the target column vector being held by the second participant alone, or the target column vector being in a shared form for the first participant and the second participant, and the apparatus being applied to the second participant and including:

a third permutation module, configured to jointly perform a first round of secure permutation with the first participant according to the target column vector or a second shard of the target column vector held by the second participant to obtain a fourth permutation result shard of the target column vector;

a fourth permutation module, configured to jointly perform a second round of secure permutation with the first participant according to the fourth permutation result shard to obtain a third permutation result shard;

a second generation module, configured to generate a second result shard of the product according to the third permutation result shard; and

a second execution module, configured to perform a target data processing task based on the second result shard.

In a fifth aspect, the present disclosure provides a computer-readable medium having a computer program stored thereon, the program, when executed by a processing device, performing the steps of the data processing method for secure computation provided in the first aspect of the present disclosure or the steps of the data processing method for secure computation provided in the second aspect of the present disclosure.

In a sixth aspect, the present disclosure provides an electronic device, including:

a storage device having a computer program stored thereon; and

a processing device configured to execute the computer program in the storage device to perform the steps of the data processing method for secure computation provided in the first aspect of the present disclosure or the steps of the data processing method for secure computation provided in the second aspect of the present disclosure.

In the above technical solution, when calculating the product of the target matrix and the target column vector, two participants may respectively obtain permutation result shards for generating the above product through two rounds of secure permutation, and then the two participants respectively generate shard data of the above result according to the permutation result shards obtained by the two participants, which is convenient and fast, and improves the service processing efficiency of the secure computation. In addition, the communication in the entire computing process is to call a secure permutation protocol in n dimensions twice (since the target column vector is in n dimensions). In this way, the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be further improved.

Other features and advantages of the present disclosure will be described in detail in the following detailed description section.

BRIEF DESCRIPTION OF DRAWINGS

The above and other features, advantages, and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the originals and elements are not necessarily drawn to scale. In the drawings:

FIG. 1 is a flowchart of a data processing method for secure computation applied to a first participant according to an exemplary embodiment.
FIG. 2 is a flowchart of a data processing method for secure computation applied to a second participant according to an exemplary embodiment.
FIG. 3 is a block diagram of a data processing apparatus for secure computation applied to a first participant according to an exemplary embodiment.
FIG. 4 is a block diagram of a data processing apparatus for secure computation applied to a second participant according to an exemplary embodiment.
FIG. 5 is a structural diagram of an electronic device according to an exemplary embodiment.

DETAILED DESCRIPTION

Before introducing specific embodiments of the present disclosure, specific application scenarios of multi-party secure computation and nouns involved in the present disclosure will be introduced and explained first.

Ring: referring to a set, which defines two operations of addition and multiplication, and forms an Abelian group for the addition, and forms a semigroup for multiplication of elements other than 0, and the multiplication satisfies the distribution rate for the addition.

A ring composed of addition and multiplication is defined on $\mathbb{Z}/N\mathbb{Z} = \{0, 1, \cdots, N-1\}$. The addition is defined as an integer addition modulo (mod) N, and the multiplication is defined as an integer multiplication mod N, where N is an integer greater than 1.

A one-to-one mapping from a finite set onto itself is called a permutation. The group formed by all permutations of elements in a finite set of n elements is called an n-order symmetric group.

Secret sharing, also known as secret splitting or secret sharing, is based on the principle of splitting a secret (e.g., a key, privacy data, etc.) into multiple shares, which are then stored by different data parties. The secret can be recovered only when more than a threshold number of parties combine their shards; shares obtained from less than the threshold number of parties cannot recover any information of the secret. In multi-party secure computation, the threshold number is usually the same as the number of participants, and the shares into which the secret is split may also be referred to as shards.

A secure permutation protocol, also known as an oblivious permutation protocol, may have various functions according to different inputs. In implementation 1, the functions of the secure permutation protocol are as follows: the P0 party inputs permutation information $\sigma$, and the P1 party inputs a data set $x$; the output result is shards $y_0, y_1$ of the permuted data set, where $y_0$ is the output of the P0 party, $y_1$ is the output of the P1 party, and the following conditions are satisfied: $y_0 + y_1 = \sigma(x)$. Wherein, $\sigma \in S_n, x \in A^n$, A is an Abelian group, n is the number of elements in A, and $S_n$ is an n-order symmetric group.

The secure permutation protocol in the above implementation has various implementations, and the present disclosure uses a typical implementation by three parties (including the P0 party, the P1 party, and a semi-trusted third party P2) as an example for description. The P2 party shares a seed seed0 with the P0 party, and the P2 party shares a seed seed1 with the P1 party. The specific implementation is as follows:

The P2 party generates random permutation information $\tilde{\sigma}$ and a random column vector $u_0$ based on the seed seed0, generates a random column vector $\tilde{x}$ based on seed1, calculates $u_1 = \tilde{\sigma}(\tilde{x}) - u_0$, and sends $u_1$ to the P1 party (this step can be performed offline), where $\tilde{\sigma} \in S_n, \tilde{x}, u_0, u_1 \in A^n$, $u_0$ and $\tilde{x}$ are all n-dimensional column vectors; the P0 party generates $\tilde{\sigma}$ and $u_0$ based on the seed seed0, and sends $\delta\sigma$ to the P1 party, where $\delta\sigma = \sigma * \tilde{\sigma}^{-1}$; the P1 party generates $\tilde{x}$ based on the seed seed1, and sends $\delta x$ to the P0 party, where $\delta x = x - \tilde{x}$; the P0 party generates an output result $y_0 = \sigma(\delta x) + \delta\sigma * u_0$ based on $\sigma, u_0, \delta\sigma$ and $\delta x$ received from the P1 party, and the P1 party generates an output result $y_1 = \delta\sigma * u_1$ based on $\delta\sigma$ received from the P0 party and $u_1$ received from the P2 party.

In implementation 2, the functions of the secure permutation protocol are as follows: the P0 party inputs permutation information $\sigma$ and a shard $x_0$ of a data set $x$, and the P1 party inputs another shard $x_1$ of the data set x;

the output result is shards $z_0$, $z_1$ of the permuted data set, where $z_0$ is the output of the P0 party, $z_1$ is the output of the P1 party, and the following conditions are satisfied: $z_0 + z_1 = \sigma(x_0 + x_1)$.

The secure permutation protocol in the above implementation has various implementations, and the present disclosure uses a typical implementation by three parties (including the P0 party, the P1 party, and a semi-trusted third party P2) as an example for description. The P2 party shares a seed seed0 with the P0 party, and the P2 party shares a seed seed1 with the P1 party. The specific implementation is as follows:

The P2 party generates random permutation information $\tilde{\sigma}$ and a random column vector $u_0$ based on the seed seed0, generates a random column vector $\bar{x}$ based on seed1, calculates $u_1 = \tilde{\sigma}(\bar{x}) - u_0$, and sends $u_1$ to the P1 party (this step can be performed offline); the P0 party generates $\tilde{\sigma}$ and $u_0$ based on the seed seed0, and sends $\delta\sigma$ to the P1 party, where $\delta\sigma = \sigma * \tilde{\sigma}^{-1}$; the P1 party generates $\bar{x}$ based on the seed seed1, and sends $\delta x_1$ to the P0 party, where $\delta x_1 = x_1 - \bar{x}$; the P0 party generates an output result $z_0 = \sigma(\delta x_1) + \delta\sigma * u_0 + \sigma(x_0)$ based on $\sigma$, $u_0$, $\delta\sigma$ and $\delta x_1$ received from the P1 party, and the P1 party generates an output result $z_1 = \delta\sigma * u_1$ based on $\delta\sigma$ received from the P0 party and $u_1$ received from the P2 party.

The offline communication volume and the online communication volume in implementation 1 and implementation 2 are the same, where the offline communication volume is n*1, the online communication volume is nlogn+n*1, and the total communication volume is nlogn+2n*1, where $l = \log |A|$, and $|A|$ is the number of elements in A.

In practical applications, for the purpose of privacy protection, multi-party secure computation algorithms are usually black-box algorithms, and data transmission behaviors between computing nodes carrying the multi-party secure computation algorithms are not transparent. As discussed in the background section, typical applications of multi-party secure computation include machine learning, where multi-party secure computation technology can be used to protect privacy data in the inference and training stages of machine learning, mainly involving the protection of model parameters and the protection of each participant's data during training.

At present, common privacy protection machine learning solutions based on secure multi-party computation include: privacy protection machine learning protocols based on technologies such as garbled circuits and oblivious transfer, and executing secure multi-party computation protocols to complete the calculation of non-linear operations such as activation functions. Based on the secret sharing technology, multiple parties are allowed to participate in the training or prediction of a machine learning network model, and the process will not disclose data or model information.

In addition to the above application fields, multi-party secure computation can also be applied to fields such as network security detection with privacy protection, joint statistical analysis of multi-party data with privacy protection, spam cleaning and filtering of encrypted emails, and advertisement conversion.

Among them, two-party secure computation is usually used for joint statistical analysis of multi-party data with privacy protection, that is, querying across two-party databases while protecting private data of two parties.

For example, the following Structured Query Language (SQL) statement (hereinafter referred to as the first SQL statement) is considered:

select a.key, sum(a.w * b.y) from a join b on a.id=b.id group by a.key;

The SQL statement is used to align the table a with the table b according to the id column, and then group data of each row according to the field a.key to obtain m groups (m is the number of categories of values that a.key can take in aligned table shards), and sum a.w * b.y for each group. Wherein, the table a is stored in a first participant P0, the table b is stored in a second participant P1, and P0 and P1 perform the SQL query through two-party secure computation technology without exposing their own privacy data to each other, and only expose the query result to the querying party after the query ends. For example, P0 and P1 implement the query of the above first SQL statement in the following manner:

first, the two parties align data according to the id column through Private Set Intersection (PSI), and the aligned data of the P0 party is an n*2 matrix composed of two columns "a.key" and "a.w"; the data of the P1 party is an n*1 matrix composed of the column "b.y", n is the number of rows in which the values of the connection field (i.e., id) in the table a and the table b are equal, that is, the number of rows of the aligned table shards;

then, the two parties collaboratively compute a.w * b.y through the two-party secure computation technology to obtain a computation result t, where t is an n*1 matrix, which is stored in both parties in a shared form;

next, the two parties compute an aggregate function sum_group_by(t, a.key) through the two-party secure computation technology to obtain a computation result, where the computation result is an m*1 matrix, which is stored in both parties in a shared form; and

finally, P0 and P1 feed the computation result back to the querying party, and the querying party sums to obtain a plaintext query result.

Among them, PSI is a type of proprietary protocol in the field of secure multi-party computation, which allows two participating parties to input private sets and jointly compute the intersection of the sets, and ensures that no additional element information other than the intersection of the sets is leaked.

For another example, the following SQL statement (hereinafter referred to as the second SQL statement) is considered:

select a.key, sum(b.y) from a join b on a.id=b.id group by a.key;

The SQL statement is used to align the table a with the table b according to the id column, and then group data of each row according to the field a.key to obtain m groups (m is the number of categories of values that a.key can take in aligned table shards), and sum b.y for each group. Wherein, the table a is stored in a first participant P0, the table b is stored in a second participant P1, and P0 and P1 perform the SQL query through two-party secure computation technology without exposing their own privacy data to each other, and only expose the query result to the querying party after the query ends. For example, P0 and P1 implement the query of the above second SQL statement in the following manner:

first, the two parties align data according to the id column through PSI, and the aligned data of the P0 party is an $n*1$ matrix composed of the column "a.key"; the data of the P1 party is an $n*1$ matrix composed of the column "b.y", and n is the number of rows in which the values of the connection field (i.e., id) in the table a and the table b are equal;

then, the two parties compute an aggregate function sum_group_by(t, a.key) through the two-party secure computation technology to obtain a computation result, where t is a column vector composed of elements in the column b.y, and the computation result is an $m*1$ matrix, which is stored in both parties in a shared form; and

finally, P0 and P1 feed the computation result back to the querying party, and the querying party sums to obtain a plaintext query result.

For the above two SQL examples, sum_group_by(t, a.key) is usually calculated in the following manner: first, the P0 party performs one-hot encoding on the "a.key" column in the aligned local table shard to obtain an $n*m$ matrix K, where each row of K is an m-dimensional one-hot vector; then, P0 and P1 calculate $K^T t$ by calling a scalar multiplication protocol or a matrix multiplication protocol, and these two methods usually have huge communication overhead, as shown in Table 1 below:

Table 1 Communication overhead for calculating $K^T t$

| | Offline communication volume (Offline) | Online communication volume (Online) | Total communication volume (Total) |
|---|---|---|---|
| Scalar multiplication | $mnl$ | $4mnl$ | $5mnl$ |
| Matrix multiplication | $ml$ | $2(mn + n)l$ | $(2mn + 2n + m)l$ |
| where $t \in A^n$. | | | |

In view of this, the present disclosure provides a data processing method and apparatus for secure computation, a medium, and an electronic device.

Embodiments of the present disclosure will be described in more detail below with reference to the drawings. Although some embodiments of the present disclosure are shown in the drawings, it should be understood that the present disclosure may be implemented in various forms, and should not be construed as limited to the embodiments set forth herein. On the contrary, these embodiments are provided for a more thorough and complete understanding of the present disclosure. It should be understood that the drawings and embodiments of the present disclosure are only for exemplary purposes, and are not used to limit the protection scope of the present disclosure.

It should be understood that the various steps described in the method implementations of the present disclosure may be performed in different orders, and/or performed in parallel. In addition, the method implementations may include additional steps and/or omit performing the illustrated steps. The scope of the present disclosure is not limited in this respect.

The term "comprise/include" and its variants as used herein are open-ended inclusions, that is, "comprise/include but not limited to". The term "based on" is "based at least in part on". The term "an embodiment" means "at least one embodiment"; the term "another embodiment" means "at least one another embodiment"; the term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not used to limit the order or interdependence of functions performed by these apparatuses, modules, or units.

It should be noted that the modifiers "a" and "a plurality" mentioned in the present disclosure are illustrative and not restrictive, and those skilled in the art should understand that unless the context clearly indicates otherwise, they should be understood as "one or more".

The names of messages or information exchanged between multiple apparatuses in the implementations of the present disclosure are only for illustrative purposes, and are not used to limit the scope of these messages or information.

It can be understood that before using the technical solutions disclosed in the embodiments of the present disclosure, the user shall be informed of types, use scope, use scenarios, etc. of personal information involved in the present disclosure in an appropriate manner according to relevant laws and regulations, and the user's authorization shall be obtained.

For example, when receiving an active request from a user, prompt information is sent to the user to clearly inform the user that the operation requested to be performed will require the acquisition and use of the user's information. Thereby, the user can independently choose whether to provide information to software or hardware such as an electronic device, an application, a server, or a storage medium that performs the operation of the technical solution of the present disclosure according to the prompt information.

As an optional but non-limiting implementation, the method of sending prompt information to the user in response to receiving an active request from the user may be, for example, in the form of a pop-up window, and the prompt information may be presented in text in the pop-up window. In addition, the pop-up window may also carry a selection control for the user to select "agree" or "disagree" to provide information to the electronic device.

It can be understood that the above process of notifying and obtaining user authorization is only illustrative, and does not constitute a limitation on the implementation of the present disclosure. Other methods that satisfy relevant laws and regulations can also be applied to the implementation of the present disclosure.

Meanwhile, it can be understood that the data involved in the technical solution (including but not limited to the data itself, the acquisition or use of the data) should comply with the requirements of corresponding laws, regulations, and related provisions.

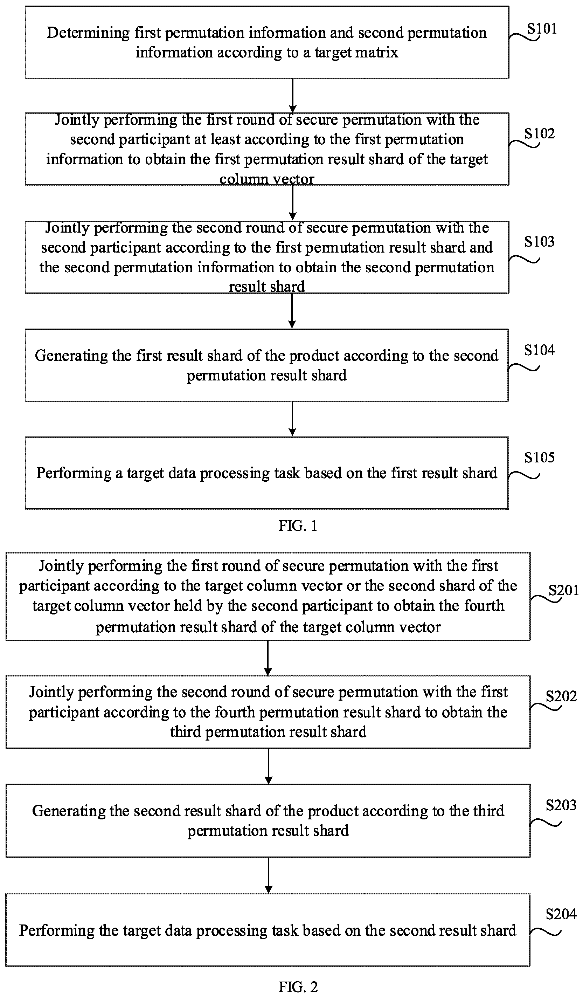

FIG. 1 is a flowchart of a data processing method for secure computation applied to a first participant according to an exemplary embodiment. As shown in FIG. 1, the method may include S101-S105.

In S101, determining first permutation information and second permutation information according to a target matrix.

In the present disclosure, the secure computation is used for a first participant and a second participant to collaboratively compute a product of an m*n target matrix and an n-dimensional target column vector. Each column of the target matrix is an m-dimensional one-hot vector, each row of the target matrix includes a non-zero element, and $m \leq n$. It can be understood that the target matrix and the target column vector in the present disclosure may be any data that is not convenient for the holder to disclose, and may include, but not limited to, model parameters of a neural network model, etc. The method provided by the embodiments of the present disclosure may be applied to ciphertext multiplication operations in tasks such as data computing, cleaning, analysis, model training, storage, and database query based on ciphertext.

The target matrix is held by the first participant alone, and the target column vector is held by the second participant alone, or the target column vector is in a shared form for the first participant and the second participant, that is, the first participant holds part or all of the target column vector. Exemplarily, the target matrix is $K^T$ in the above two SQL examples, and the target column vector is t in the above two SQL examples, where the first participant is P0 and the second participant is P1.

In an implementation, the target matrix is held by the first participant alone, and the target column vector is held by the second participant alone, that is, the second participant holds all of the target column vector. In the above second SQL statement example, P1 (that is, the second participant) holds t (that is, b.y) alone.

In another implementation, the target matrix is held by the first participant alone, and the target column vector is in a shared form for the first participant and the second participant, that is, the second participant holds part of the target column vector, where the first participant holds a first shard of the target column vector, and the second participant holds a second shard of the target column vector. In the above first SQL statement example, t is stored in both parties in a shared form.

In S102, jointly performing the first round of secure permutation with the second participant at least according to the first permutation information to obtain the first permutation result shard of the target column vector.

In an implementation, the target column vector is in a shared form for the first participant and the second participant. At this time, the first participant may jointly perform the first round of secure permutation with the second participant according to the first permutation information and the first shard of the target column vector held by the first participant to obtain the first permutation result shard of the target column vector; and the second participant may jointly perform the first round of secure permutation with the first participant according to the second shard of the target column vector held by the second participant to obtain the fourth permutation result shard of the target column vector. That is, the first participant inputs the first permutation information and the first shard, the second participant inputs the second shard, and the two parties respectively obtain the first permutation result shard and the fourth permutation result shard of the target column vector by calling a secure permutation protocol (for the specific implementation, see implementation 2 above).

In another implementation, the target column vector is held by the second participant alone. At this time, the first participant may jointly perform the first round of secure permutation with the second participant according to the first permutation information to obtain the first permutation result shard of the target column vector; and the second participant may jointly perform the first round of secure permutation with the first participant according to the target column vector held by the second participant to obtain the fourth permutation result shard of the target column vector. That is, the first participant inputs the first permutation information, the second participant inputs the target column vector, and the two parties respectively obtain the first permutation result shard and the fourth permutation result shard of the target column vector by calling a secure permutation protocol (for the specific implementation, see implementation 1 above).

In S103, jointly performing the second round of secure permutation with the second participant according to the first permutation result shard and the second permutation information to obtain the second permutation result shard.

In the present disclosure, the first participant and the second participant jointly perform the first round of secure permutation and the second round of secure permutation with the aid of a semi-trusted third party (i.e., P2).

In S104, generating the first result shard of the product according to the second permutation result shard.

In the present disclosure, the first participant may jointly perform the second round of secure permutation with the second participant according to the first permutation result shard and the second permutation information to obtain the second permutation result shard, and generate the first result shard of the product according to the second permutation result shard; at the same time, the second participant may jointly perform the second round of secure permutation with the first participant according to the fourth permutation result shard to obtain the third permutation result shard, and generate the second result shard of the product according to the third permutation result shard. After that, the first participant and the second participant may share the result shards generated by each other in a shared manner, and aggregate and combine the result shards of the two to obtain a final computation result (i.e., the product of the target matrix and the target column vector). The result of the product of the target matrix and the target column vector includes the first result shard and the second result shard, that is, target matrix*target column vector = first result shard + second result shard.

The communication in the entire computation process lies in that a secure permutation protocol in n dimensions (since the target column vector is in n dimensions) is called twice. Therefore, the online communication volume for calculating the product of the target matrix and the target column vector is twice the online communication volume of the secure permutation protocol, the offline communication volume for calculating the product of the target matrix and the target column vector is twice the offline communication volume of the secure permutation protocol, and accordingly, the total communication volume for calculating the product of the target matrix and the target column vector is twice the total communication volume of the secure permutation protocol. Therefore, the offline communication volume for calculating the product of the target matrix and the target column vector is 2n*1, the online communication volume is 2nlogn+2n*1, and the total communication volume is 2nlogn+4n*1. It can be seen that the data communication volume for calculating the product of the target matrix and the target column vector is only related to n, but not related to m, and does not increase with the increase of m.

In S105, performing a target data processing task based on the first result shard.

The above target data processing task may be an SQL query task, a machine learning network model training task, a machine learning network model prediction task, and the like.

In an implementation, when the target data processing task is an SQL query task, the first participant may feed the first result shard back to a querying party, that is, perform the target data processing task; at the same time, the second participant may feed the second result shard back to the querying party; and after that, the querying party aggregates and combines the first result shard and the second result shard to obtain a final query result.

In the above technical solution, when calculating the product of the target matrix and the target column vector, two participants may respectively obtain permutation result shards for generating the above product through two rounds of secure permutation, and then the two participants respectively generate shard data of the above result according to the permutation result shards obtained by the two participants, which is convenient and fast, and improves the service processing efficiency of the secure computation. In addition, the communication in the entire computing process is to call a secure permutation protocol in n dimensions twice (since the target column vector is in n dimensions). In this way, the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be further improved.

A detailed description will be given below for the specific implementation of determining the first permutation information and the second permutation information according to the target matrix in S101. For example, the following steps (11) and (12) may be used for implementation.

In step (11), obtaining a reference matrix and an n-order lower triangular matrix.

In the present disclosure, the reference matrix is an m*n matrix. When m=n, the reference matrix is $K1 = d$; when $m < n$, $K1 = (O_{m,n-m}, d)$, $O_{m,n-m}$ is an m*(n-m) zero matrix. Wherein, $d$ is an m-order square matrix, and

$$d = \begin{pmatrix} 1 & 0 & \cdots & 0 & 0 \\ -1 & 1 & \cdots & 0 & 0 \\ 0 & -1 & \ddots & 0 & 0 \\ \vdots & \vdots & \ddots & 1 & 0 \\ 0 & 0 & \cdots & -1 & 1 \end{pmatrix}$$

, the diagonal elements of the matrix $d$ are all 1, the values of elements in the next adjacent row of each diagonal element and in the same column as the diagonal element are -1, and other elements are all 0.

$$d = \begin{pmatrix} 1 & 0 & 0 & 0 \\ -1 & 1 & 0 & 0 \\ 0 & -1 & 1 & 0 \\ 0 & 0 & -1 & 1 \end{pmatrix}, O_{\mathrm{m,n-m}} = \begin{pmatrix} 0 \\ 0 \\ 0 \\ 0 \end{pmatrix},$$

Exemplarily, m=4, n=5, then

$$K1 = \begin{pmatrix} 0 & 1 & 0 & 0 & 0 \\ 0 & -1 & 1 & 0 & 0 \\ 0 & 0 & -1 & 1 & 0 \\ 0 & 0 & 0 & -1 & 1 \end{pmatrix}.$$

In step (12), performing matrix decomposition on the target matrix according to the reference matrix and the n-order lower triangular matrix to obtain the reference matrix, a first permutation matrix, the n-order lower triangular matrix, and a second permutation matrix that are sequentially multiplied.

In the present disclosure, the first permutation matrix is a matrix representation of the first permutation information, and the second permutation matrix is a matrix representation of the second permutation information. The first permutation information and the second permutation information may both be represented in the form of a tuple, and after the first permutation matrix and the second permutation matrix are obtained, they may be converted into the form of a tuple.

Exemplarily, the target matrix Q may be decomposed into the following form:

$$Q = K1 * \sigma_1 * \textstyle\int * \sigma_2,$$

where $\sigma_1$ is the first permutation matrix, $\sigma_2$ is the second permutation matrix, and $\int$ is the n-order lower triangular matrix.

Exemplarily, $Q = \begin{pmatrix} 0 & 1 & 0 & 0 & 0 \\ 0 & 0 & 1 & 0 & 0 \\ 1 & 0 & 0 & 0 & 1 \\ 0 & 0 & 0 & 1 & 0 \end{pmatrix}$, that is, m=4, n=5, then $\sigma_1 = \begin{pmatrix} 0 & 1 & 0 & 0 & 0 \\ 0 & 0 & 1 & 0 & 0 \\ 1 & 0 & 0 & 0 & 0 \\ 0 & 0 & 0 & 0 & 1 \\ 0 & 0 & 0 & 1 & 0 \end{pmatrix}$,

$$\sigma_2 = \begin{pmatrix} 0 & 0 & 1 & 0 & 0 \\ 1 & 0 & 0 & 0 & 0 \\ 0 & 1 & 0 & 0 & 0 \\ 0 & 0 & 0 & 1 & 0 \\ 0 & 0 & 0 & 0 & 1 \end{pmatrix}.$$

The tuple form corresponding to $\sigma_1$ is (2 3 1 5 4), that is, the first permutation information is (2 3 1 5 4), which means that the first element after permutation is the second element of the original data set, the second element after permutation is the third element of the original data set, the third element after permutation is the first element of the original data set, the fourth element after permutation is the fifth element of the original data set, and the fifth element after permutation is the fourth element of the original data set.

The tuple form corresponding to $\sigma_2$ is (3 1 2 4 5), that is, the second permutation information is (3 1 2 4 5), which means that the first element after permutation is the third element of the original data set, the second element after permutation is the first element of the original data set, the third element after permutation is the second element of the original data set, the fourth element after permutation is still the fourth element of the original data set, and the fifth element after permutation is still the fifth element of the original data set.

A detailed description will be given below for the specific implementation of jointly performing the second round of secure permutation with the second participant according to the first permutation result shard and the second permutation information in S103 to obtain the second permutation result shard. For example, the following steps (31) and (32) may be used for implementation.

In step (31), calculating a product of an n-order lower triangular matrix and the first permutation result shard to obtain a first matrix.

In step (32), jointly performing the second round of secure permutation with the second participant according to the first matrix and the second permutation information to obtain the second permutation result shard.

In the present disclosure, the first participant calculates the product of the n-order lower triangular matrix and the first permutation result shard to obtain the first matrix, and jointly performs the second round of secure permutation with the second participant according to the first matrix and the second permutation information to obtain the second permutation result shard; at the same time, the second participant calculates the product of the n-order lower triangular matrix and the fourth permutation result shard to obtain a second matrix, and jointly performs the second round of secure permutation with the first participant according to the second matrix to obtain the third permutation result shard. That is, the first participant inputs the first matrix and the second permutation information, the second participant inputs the second matrix, and the two parties respectively obtain the second permutation result shard and the third permutation result shard by calling a secure permutation protocol (for the specific implementation, see implementation 2 above).

A detailed description will be given below for the specific implementation of generating the first result shard according to the second permutation result shard in S104. For example, the following steps (41) and (42) may be used for implementation.

In step (31), obtaining a reference matrix.

In step (32), determining a product of the reference matrix and the second permutation result shard as the first result shard.

At the same time, the second participant may generate the second result shard of the above product according to the third permutation result shard in the following manner: obtaining a reference matrix; and determining a product of the reference matrix and the third permutation result shard as the second result shard of the above product.

After obtaining the first result shard and the second result shard respectively, the first participant and the second participant may add the two to obtain a final computation result (i.e., the product of the target matrix and the target column vector). For example, the above data processing method for secure computation applied to the first participant may further include the following two steps:

obtaining the second result shard of the product generated by the second participant, where the second result shard is generated based on the third permutation result shard, and the third permutation result shard is obtained when the second participant performs the second round of secure permutation; and

determining a sum of the first result shard and the second result shard as the product of the target matrix and the target column vector.

In addition to being executed by the first participant, the above steps may also be executed by other electronic devices other than the first participant and the second participant. At this time, the other electronic device obtains the first result shard from the first participant and the second result shard from the second participant, respectively, and then determines the sum of the two as the product of the target matrix and the target column vector.

In addition, before S101, the above method may further include the following steps:

performing, in response to receiving a target data processing task, private set intersection on a first attribute column in a first data table and a second data table, with the second participant, to obtain a first table shard of an inner join result set of the first data table and the second data table; and

generating the target matrix according to an attribute value of a grouping field in the first table shard.

In this implementation, the target data processing task includes a Structured Query Language statement, that is, the target data processing task is an SQL query task, where the Structured Query Language statement is used to perform, at least according to a second attribute column in a second table shard, grouping aggregation on the inner join result set according to the grouping field in the first table shard, the second table shard is a table shard of the inner join result set obtained by the second participant after the private set intersection, and the first data table and the second data table are held by the first participant and the second participant, respectively.

m is the number of categories of attribute values of the grouping field in the first table shard, and n is the number of rows of the first table shard. The first participant may generate the target matrix according to the attribute value of the grouping field in the first table shard in the following manner:
converting each attribute value in a column where the grouping field in the first table shard is located into an m-dimensional one-hot vector.

Exemplarily, the attribute values of the grouping field in the first table shard include attribute value 1, attribute value 2, and attribute value 3, where the one-hot vector corresponding to attribute value 1 is 100, the one-hot vector corresponding to attribute value 2 is 010, and the one-hot vector corresponding to attribute value 3 is 001.

The target column vector is generated at least based on the second attribute column. In an implementation, the target column vector is in a shared form for the first participant and the second participant. At this time, the first participant and the second participant collaboratively compute the product of the second attribute column and a third attribute column in the first table shard. The first participant obtains a first shard of the target column vector held by the first participant, and at the same time, the second participant obtains a second shard of the target column vector. At this time, the SQL statement in the above target data processing task is used to perform, according to the second attribute column in the second table shard and the third attribute column in the first table shard, grouping aggregation on the inner join result set according to the grouping field in the first table shard.

Exemplarily, the SQL statement in the target data processing task is the above first SQL statement, that is, select a.key, sum(a.w * b.y) from a join b on a.id=b.id group by a.key, where the first data table is the a table, the second data table is the b table, the first attribute column is the id column, the second attribute column is the b.y column in the second table shard, the third attribute column is the a.w column in the first table shard, and the grouping field is a.key.

In another implementation, the target column vector is held by the second participant alone. At this time, the elements in the second attribute column in the second table shard constitute the target column vector. At this time, the SQL statement in the above target data processing task is used to perform, according to the second attribute column in the second table shard, grouping aggregation on the inner join result set according to the grouping field in the first table shard.

Exemplarily, the SQL statement in the target data processing task is the above second SQL statement, that is, select a.key, sum(b.y) from a join b on a.id=b.id group by a.key, where the first data table is the table a, the second data table is the table b, the first attribute column is the id column, the second attribute column is the b.y column in the second table shard, and the grouping field is a.key.

FIG. 2 is a flowchart of a data processing method for secure computation applied to a second participant according to an exemplary embodiment. As shown in FIG. 2, the method may include S201-S204.

In S201, jointly performing the first round of secure permutation with the first participant according to the target column vector or the second shard of the target column vector held by the second participant to obtain the fourth permutation result shard of the target column vector.

In the present disclosure, the secure computation is used for the first participant and the second participant to collaboratively compute the product of the m*n target matrix and the n-dimensional target column vector. Each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant.

In S202, jointly performing the second round of secure permutation with the first participant according to the fourth permutation result shard to obtain the third permutation result shard.

In S203, generating the second result shard of the product according to the third permutation result shard.

In S204, performing the target data processing task based on the second result shard.

The above target data processing task may be an SQL query task, a machine learning network model training task, a machine learning network model prediction task, and the like.

In an implementation, when the target data processing task is an SQL query task, the first participant may feed the first result shard back to a querying party; at the same time, the second participant may feed the second result shard back to the querying party, that is, perform the target data processing task; and after that, the querying party aggregates and combines the first result shard and the second result shard to obtain a final query result.

In the above technical solution, when calculating the product of the target matrix and the target column vector, two participants may respectively obtain permutation result shards for generating the above product through two rounds of secure permutation, and then the two participants respectively generate shard data of the above result according to the permutation result shards obtained by the two participants, which is convenient and fast, and improves the service processing efficiency of the secure computation. In addition, the communication in the entire computing process is to call a secure permutation protocol in n dimensions twice (since the target column vector is in n dimensions). In this way, the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be further improved.

Optionally, jointly performing the second round of secure permutation with the first participant according to the fourth permutation result shard to obtain the third permutation result shard includes:

calculating a product of an n-order lower triangular matrix and the fourth permutation result shard to obtain a second matrix; and

jointly performing the second round of secure permutation with the first participant according to the second matrix to obtain the third permutation result shard.

Optionally, generating the second result shard according to the third permutation result shard includes:

obtaining a reference matrix; and

determining a product of the reference matrix and the third permutation result shard as the second result shard.

Optionally, the above data processing method for secure computation applied to the second participant further includes:

obtaining the first result shard of the product generated by the first participant, where the first result shard is generated based on the second permutation result shard, and the second permutation result shard is obtained when the first participant performs the second round of secure permutation; and

determining a sum of the first result shard and the second result shard as the product of the target matrix and the target column vector.

Optionally, the above data processing method for secure computation applied to the second participant further includes:

performing, in response to receiving a target data processing task, private set intersection on a first attribute column in a first data table and a second data table, with the first participant, to obtain a second table shard of an inner join result set of the first data table and the second data table, where the target data processing task includes a Structured Query Language statement, the Structured Query Language statement is used to perform, at least according to a second attribute column in the second table shard, grouping aggregation on the inner join result set according to a grouping field in the first table shard, the first table shard is a table shard of the inner join result set obtained by the first participant after the private set intersection, the first data table and the second data table are held by the first participant and the second participant, respectively, and the target column vector is generated at least based on the second attribute column.

Optionally, the first participant and the second participant jointly perform the first round of secure permutation and the second round of secure permutation with the aid of a semi-trusted third party.

The specific implementations of the steps in the data processing method for secure computation applied to the second participant according to the embodiment of the present disclosure have been described in detail in the data processing method for secure computation applied to the first participant according to the embodiment of the present disclosure, which will not be repeated here.

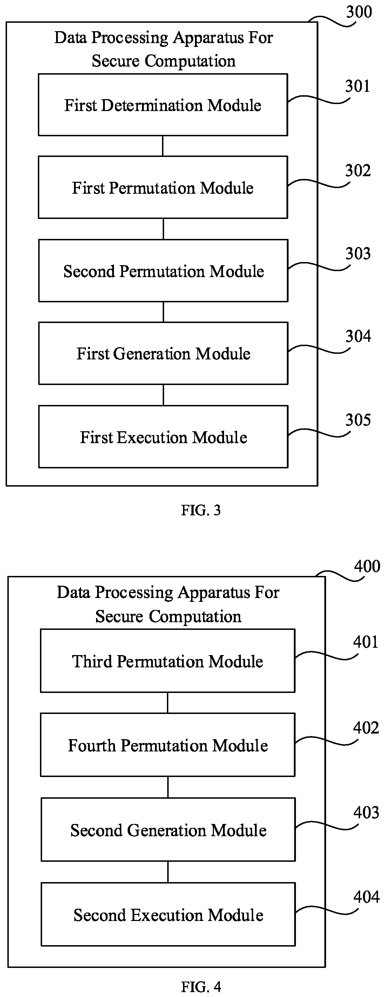

FIG. 3 is a block diagram of a data processing apparatus for secure computation applied to a first participant according to an exemplary embodiment. The secure computation is used for a first participant and a second participant to collaboratively compute a product of an m*n target matrix and an n-dimensional target column vector. Each column of the target matrix is an m-dimensional one-hot vector, each row of the target matrix includes a non-zero element, m ≤ n, the target matrix is held by the first participant alone, and the target column vector is held by the second participant alone, or the target column vector is in a shared form for the first participant and the second participant. As shown in FIG. 3, the apparatus 300 includes:

a first determination module 301, configured to determine first permutation information and second permutation information according to the target matrix;

a first permutation module 302, configured to jointly perform a first round of secure permutation with the second participant at least according to the first permutation information to obtain a first permutation result shard of the target column vector;

a second permutation module 303, configured to jointly perform a second round of secure permutation with the second participant according to the first permutation result shard and the second permutation information to obtain a second permutation result shard;

a first generation module 304, configured to generate a first result shard of the product according to the second permutation result shard; and
a first execution module 305, configured to perform a target data processing task based on the first result shard.

In the above technical solution, when calculating the product of the target matrix and the target column vector, two participants may respectively obtain permutation result shards for generating the above product through two rounds of secure permutation, and then the two participants respectively generate shard data of the above result according to the permutation result shards obtained by the two participants, which is convenient and fast, and improves the service processing efficiency of the secure computation. In addition, the communication in the entire computing process is to call a secure permutation protocol in n dimensions twice (since the target column vector is in n dimensions). In this way, the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be further improved.

Optionally, the first determination module 301 includes:

a first acquisition submodule, configured to acquire a reference matrix and an n-order lower triangular matrix; and
a matrix decomposition submodule, configured to perform matrix decomposition on the target matrix according to the reference matrix and the n-order lower triangular matrix to obtain the reference matrix, a first permutation matrix, the n-order lower triangular matrix, and a second permutation matrix that are sequentially multiplied, where the first permutation matrix is a matrix representation of the first permutation information, and the second permutation matrix is a matrix representation of the second permutation information.

Optionally, the second permutation module 303 includes:

a first calculation submodule, configured to calculate a product of the n-order lower triangular matrix and the first permutation result shard to obtain a first matrix; and
a first permutation submodule, configured to jointly perform the second round of secure permutation with the second participant according to the first matrix and the second permutation information to obtain the second permutation result shard.

Optionally, the first generation module 304 includes:

a second acquisition submodule, configured to acquire a reference matrix; and
a determination submodule, configured to determine a product of the reference matrix and the second permutation result shard as the first result shard.

Optionally, the target column vector is in a shared form for the first participant and the second participant; and the first permutation module 302 is configured to jointly perform the first round of secure permutation with the second participant according to the first permutation information and a first shard of the target column vector held by the first participant to obtain the first permutation result shard of the target column vector.
Optionally, the target column vector is held by the second participant alone; and the first permutation module 302 is configured to jointly perform the first round of secure permutation with the second participant according to the first permutation information to obtain the first permutation result shard of the target column vector.
Optionally, the apparatus 300 further includes:

a first obtaining module, configured to obtain a second result shard of the product generated by the second participant, where the second result shard is generated based on a third permutation result shard, and the third permutation result shard is obtained when the second participant performs the second round of secure permutation; and
a second determination module, configured to determine a sum of the first result shard and the second result shard as the product of the target matrix and the target column vector.

Optionally, the apparatus 300 further includes:

a first private set intersection module, configured to perform, in response to receiving the target data processing task, private set intersection on a first attribute column in a first data table and a second data table, with the second participant, to obtain a first table shard of an inner join result set of the first data table and the second data table, where the target data processing task includes a Structured Query Language statement, the Structured Query Language statement is used to perform, at least according to a second attribute column in a second table shard, grouping aggregation on the inner join result set according to a grouping field in the first table shard, the second table shard is a table shard of the inner join result set obtained by the second participant after the private set intersection, and the first data table and the second data table are held by the first participant and the second participant, respectively; and a third generation module, configured to generate the target matrix according to an attribute value of the grouping field in the first table shard, where m is the number of categories of attribute values of the grouping field in the first table shard, and n is the number of rows of the first table shard;

where the target column vector is generated at least based on the second attribute column.

Optionally, the first participant and the second participant jointly perform the first round of secure permutation and the second round of secure permutation with the aid of a semi-trusted third party.

FIG. 4 is a block diagram of a data processing apparatus for secure computation applied to a second participant according to an exemplary embodiment. The secure computation is used for a first participant and a second participant to collaboratively compute a product of an m*n target matrix and an n-dimensional target column vector. Each column of the target matrix is an m-dimensional one-hot vector, each row of the target matrix includes a non-zero element, $m \le n$, the target matrix is held by the first participant alone, and the target column vector is held by the second participant alone, or the target column vector is in a shared form for the first participant and the second participant. As shown in FIG. 4, the apparatus 400 includes:

a third permutation module 401, configured to jointly perform a first round of secure permutation with the first participant according to the target column vector or a second shard of the target column vector held by the second participant to obtain a fourth permutation result shard of the target column vector;
a fourth permutation module 402, configured to jointly perform a second round of secure permutation with the first participant according to the fourth permutation result shard to obtain a third permutation result shard;
a second generation module 403, configured to generate a second result shard of the product according to the third permutation result shard; and
a second execution module 404, configured to perform a target data processing task based on the second result shard.

In the above technical solution, when calculating the product of the target matrix and the target column vector, two participants may respectively obtain permutation result shards for generating the above product through two rounds of secure permutation, and then the two participants respectively generate shard data of the above result according to the permutation result shards obtained by the two participants, which is convenient and fast, and improves the service processing efficiency of the secure computation. In addition, the communication in the entire computing process is to call a secure permutation protocol in n dimensions twice (since the target column vector is in n dimensions). In this way, the data communication volume of the two rounds of secure permutation is only related to n, but not related to m, and does not increase with the increase of m. Therefore, the data communication volume for calculating the product of the target matrix and the target column vector can be greatly reduced, and the service processing efficiency of the secure computation can be further improved.

Optionally, the fourth permutation module 402 includes:

a second calculation submodule, configured to calculate a product of an n-order lower triangular matrix and the fourth permutation result shard to obtain a second matrix; and
a second permutation submodule, configured to jointly perform the second round of secure permutation with the first participant according to the second matrix to obtain the third permutation result shard.

Optionally, the second generation module 403 includes:

a second obtaining module, configured to obtain a reference matrix; and
a third determination module, configured to determine a product of the reference matrix and the third permutation result shard as the second result shard.

Optionally, the apparatus 400 further includes:

a third obtaining module, configured to obtain the first result shard of the product generated by the first participant, where the first result shard is generated based on the second permutation result shard, and the second permutation result shard is obtained when the first participant performs the second round of secure permutation; and

a fourth determination module, configured to determine a sum of the first result shard and the second result shard as the product of the target matrix and the target column vector.

Optionally, the apparatus 400 further includes:

a second private set intersection module, configured to perform, in response to receiving the target data processing task, private set intersection on a first attribute column in a first data table and a second data table, with the first participant, to obtain a second table shard of an inner join result set of the first data table and the second data table, where the target data processing task includes a Structured Query Language statement, the Structured Query Language statement is used to perform, at least according to a second attribute column in the second table shard, grouping aggregation on the inner join result set according to a grouping field in the first table shard, the first table shard is a table shard of the inner join result set obtained by the first participant after the private set intersection, the first data table and the second data table are held by the first participant and the second participant, respectively, and the target column vector is generated at least based on the second attribute column.

Optionally, the first participant and the second participant jointly perform the first round of secure permutation and the second round of secure permutation with the aid of a semi-trusted third party.

The present disclosure further provides a computer-readable medium having a computer program stored thereon, where the program, when executed by a processing device, implements the steps of the above data processing method for secure computation applied to the first participant provided in the present disclosure or the steps of the above data processing method for secure computation applied to the second participant provided in the present disclosure.

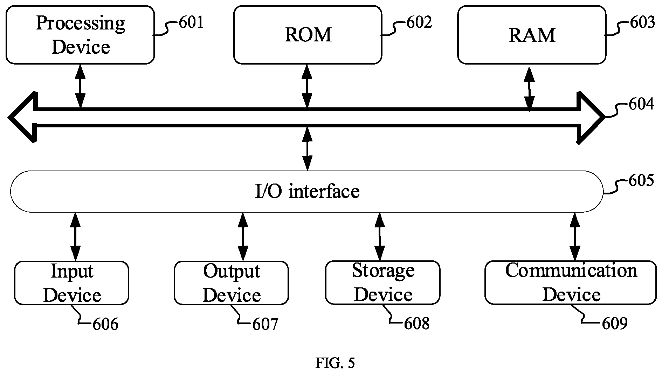

Reference is made to FIG. 5 below, which illustrates a schematic structural diagram of an electronic device (e.g., a terminal device or a server) 600 suitable for implementing embodiments of the present disclosure. The terminal device in the embodiment of the present disclosure may include, but not limited to, a mobile terminal such as a mobile phone, a notebook computer, a digital broadcast receiver, a PDA (Personal Digital Assistant), a tablet computer, a PMP (Portable Multimedia Player), a vehicle-mounted terminal (e.g., a vehicle navigation terminal), and a fixed terminal such as a digital TV, a desktop computer, etc. The electronic device shown in FIG. 5 is only an example, and should not bring any limitation to the functions and scope of use of the embodiments of the present disclosure.

As shown in FIG. 5, the electronic device 600 may include a processing device (e.g., a central processing unit, a graphics processing unit, etc.) 601, which can execute various appropriate actions and processes according to a program stored in a read-only memory (ROM) 602 or a program loaded from a storage device 608 into a random-access memory (RAM) 603. The RAM 603 also stores various programs and data required for the operation of the electronic device 600. The processing device 601, the ROM 602, and the RAM 603 are connected to each other through a bus 604. An input/output (I/O) interface 605 is also connected to the bus 604.

Generally, the following devices may be connected to the I/O interface 605: an input device 606 including, for example, a touchscreen, a touchpad, a keyboard, a mouse, a camera, a microphone, an accelerometer, a gyroscope, or the like; an output device 607 including, for example, a liquid crystal display (LCD), a speaker, a vibrator, or the like; a storage device 608 including, for example, a magnetic tape, a hard disk, or the like; and a communication device 609. The communication device 609 may allow the electronic device 600 to perform wireless or wired communication with other devices to exchange data. Although FIG. 5 shows the electronic device 600 with various devices, it should be understood that it is not required to implement or have all of the illustrated devices. More or fewer devices may alternatively be implemented or provided.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication device 609, or installed from the storage device 608, or installed from the ROM 602. When the computer program is executed by the processing device 601, the above functions defined in the method of the embodiment of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program that can be used by or in combination with an instruction execution system, apparatus, or device. In the present disclosure, the computer-readable signal medium may include a data signal propagated in a baseband or as a part of a carrier wave, in which a computer-readable program code is carried. This propagated data signal may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in combination with the instruction execution system, apparatus, or device. The program code contained on the computer-readable medium may be transmitted by any suitable medium, including but not limited to an electrical wire, an optical cable, RF (radio frequency), etc., or any suitable combination thereof.

In some implementations, clients and servers may communicate using any currently known or future developed network protocol, such as HTTP (HyperText Transfer Protocol), and may be interconnected with any form or medium of digital data communication (for example, a communication network). Examples of communication networks include a local area network ("LAN"), a wide area network ("WAN"), an internetwork (for example, the Internet), and an end-to-end network (for example, an ad hoc end-to-end network), as well as any currently known or future developed network.

The above computer-readable medium may be included in the above electronic device; or may exist independently without being assembled into the electronic device.

The above computer-readable medium carries one or more programs, and when the one or more programs are executed by the electronic device, the electronic device is caused to: determine first permutation information and second permutation information according to a target matrix, where the secure computation is used for a first participant and a second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant; jointly perform a first round of secure permutation with the second participant at least according to the first permutation information to obtain a first permutation result shard of the target column vector; jointly perform a second round of secure permutation with the second participant according to the first permutation result shard and the second permutation information to obtain a second permutation result shard; generate a first result shard of the product according to the second permutation result shard; and perform a target data processing task based on the first result shard.

Alternatively, the above computer-readable medium carries one or more programs, and when the one or more programs are executed by the electronic device, the electronic device is caused to: jointly perform a first round of secure permutation with a first participant according to a target column vector or a second shard of the target column vector held by a second participant to obtain a fourth permutation result shard of the target column vector, where the secure computation is used for the first participant and the second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant; jointly perform a second round of secure permutation with the first participant according to the fourth permutation result shard to obtain a third permutation result shard; generate a second result shard of the product according to the third permutation result shard; and perform a target data processing task based on the second result shard.

The computer program code for performing the operations of the present disclosure may be written in one or more programming languages or a combination thereof. The programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods and computer program products according to various embodiments of the present disclosure. In this regard, each block in the flowchart or block diagram may represent a module, a program segment, or a portion of code, which includes one or more executable instructions for implementing the specified logical function. It should also be noted that, in some alternative implementations, the functions noted in the blocks may also occur out of the order noted in the drawings. For example, two blocks shown in succession may, in fact, can be executed substantially concurrently, or the blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may be implemented by a combination of dedicated hardware and computer instructions.

The modules involved in the embodiments of the present disclosure may be implemented in software or hardware. Wherein, the name of a module does not constitute a limitation on the module itself under certain circumstances, for example, the first obtaining module may also be described as "a module for obtaining the second result shard of the product generated by the second participant".

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, example 1 provides a data processing method for secure computation, where the secure computation is used for a first participant and a second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant, and the method is applied to the first participant and includes:

determining first permutation information and second permutation information according to the target matrix;
jointly performing a first round of secure permutation with the second participant at least according to the first permutation information to obtain a first permutation result shard of the target column vector;
jointly performing a second round of secure permutation with the second participant according to the first permutation result shard and the second permutation information to obtain a second permutation result shard;
generating a first result shard of the product according to the second permutation result shard; and
performing a target data processing task based on the first result shard.

According to one or more embodiments of the present disclosure, example 2 provides the method of example 1, where the determining first permutation information and second permutation information according to the target matrix includes:

acquiring a reference matrix and an n-order lower triangular matrix; and
performing matrix decomposition on the target matrix according to the reference matrix and the n-order lower triangular matrix to obtain the reference matrix, a first permutation matrix, the n-order lower triangular matrix, and a second permutation matrix that are sequentially multiplied, where the first permutation matrix is a matrix representation of the first permutation information, and the second permutation matrix is a matrix representation of the second permutation information.

According to one or more embodiments of the present disclosure, example 3 provides the method of example 1, where the jointly performing the second round of secure permutation with the second participant according to the first permutation result shard and the second permutation information to obtain the second permutation result shard includes:

calculating a product of the n-order lower triangular matrix and the first permutation result shard to obtain a first matrix; and
jointly performing the second round of secure permutation with the second participant according to the first matrix and the second permutation information to obtain the second permutation result shard.

According to one or more embodiments of the present disclosure, example 4 provides the method of example 1, where the generating the first result shard according to the second permutation result shard includes:

acquiring a reference matrix; and

determining a product of the reference matrix and the second permutation result shard as the first result shard.

According to one or more embodiments of the present disclosure, example 5 provides the method of example 1, where the target column vector is in a shared form for the first participant and the second participant; and

the jointly performing the first round of secure permutation with the second participant at least according to the first permutation information to obtain the first permutation result shard of the target column vector includes:
jointly performing the first round of secure permutation with the second participant according to the first permutation information and a first shard of the target column vector held by the first participant to obtain the first permutation result shard of the target column vector.

According to one or more embodiments of the present disclosure, example 6 provides the method of example 1, where the target column vector is held by the second participant alone; and

the jointly performing the first round of secure permutation with the second participant at least according to the first permutation information to obtain the first permutation result shard of the target column vector includes:

jointly performing the first round of secure permutation with the second participant according to the first permutation information to obtain the first permutation result shard of the target column vector.

According to one or more embodiments of the present disclosure, example 7 provides the method of any one of examples 1-6, and the method further includes:

obtaining a second result shard of the product generated by the second participant, where the second result shard is generated based on a third permutation result shard, and the third permutation result shard is obtained when the second participant performs the second round of secure permutation; and
determining a sum of the first result shard and the second result shard as the product of the target matrix and the target column vector.

According to one or more embodiments of the present disclosure, example 8 provides the method of any one of examples 1-6, and the method further includes:

performing, in response to receiving the target data processing task, private set intersection on a first attribute column in a first data table and a second data table, with the second participant, to obtain a first table shard of an inner join result set of the first data table and the second data table, where the target data processing task includes a Structured Query Language statement, the Structured Query Language statement is used to perform, at least according to a second attribute column in a second table shard, grouping aggregation on the inner join result set according to a grouping field in the first table shard, the second table shard is a table shard of the inner join result set obtained by the second participant after the private set intersection, and the first data table and the second data table are held by the first participant and the second participant, respectively; and
generating the target matrix according to an attribute value of the grouping field in the first table shard, where m is the number of categories of attribute values of the grouping field in the first table shard, and n is the number of rows of the first table shard;
where the target column vector is generated at least based on the second attribute column.

According to one or more embodiments of the present disclosure, example 9 provides the method of any one of examples 1-6, where the first participant and the second participant jointly perform the first round of secure permutation and the second round of secure permutation with the aid of a semi-trusted third party.

According to one or more embodiments of the present disclosure, example 10 provides a data processing method for secure computation, where the secure computation is used for a first participant and a second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant, and the method is applied to the second participant and includes:

jointly performing a first round of secure permutation with the first participant according to the target column vector or a second shard of the target column vector held by the second participant to obtain a fourth permutation result shard of the target column vector;
jointly performing a second round of secure permutation with the first participant according to the fourth permutation result shard to obtain a third permutation result shard;
generating a second result shard of the product according to the third permutation result shard; and
performing a target data processing task based on the second result shard.

According to one or more embodiments of the present disclosure, example 11 provides the method of example 10, where the jointly performing the second round of secure permutation with the first participant according to the fourth permutation result shard to obtain the third permutation result shard includes:

calculating a product of an n-order lower triangular matrix and the fourth permutation result shard to obtain a second matrix; and
jointly performing the second round of secure permutation with the first participant according to the second matrix to obtain the third permutation result shard.

According to one or more embodiments of the present disclosure, example 12 provides the method of example 10, where the generating the second result shard according to the third permutation result shard includes:

acquiring a reference matrix; and
determining a product of the reference matrix and the third permutation result shard as the second result shard.

According to one or more embodiments of the present disclosure, example 13 provides the method of any one of examples 10-12, and the method further includes:

obtaining the first result shard of the product generated by the first participant, where the first result shard is generated based on the second permutation result shard, and the second permutation result shard is obtained when the first participant performs the second round of secure permutation; and
determining a sum of the first result shard and the second result shard as the product of the target matrix and the target column vector.

According to one or more embodiments of the present disclosure, example 14 provides the method of any one of examples 10-12, and the method further includes:
performing, in response to receiving the target data processing task, private set intersection on a first attribute column in a first data table and a second data table, with the first participant, to obtain a second table shard of an inner join result set of the first data table and the second data table, where the target data processing task includes a Structured Query Language statement, the Structured Query Language statement is used to perform, at least according to a second attribute column in a second table shard, grouping aggregation on the inner join result set according to a grouping field in the first table shard, the first table shard is a table shard of the inner join result set obtained by the first participant after the private set intersection, the first data table and the second data table are held by the first participant and the second participant, respectively, and the target column vector is generated at least based on the second attribute column.

According to one or more embodiments of the present disclosure, example 15 provides the method of any one of examples 10-12, where the first participant and the second participant jointly perform the first round of secure permutation and the second round of secure permutation with the aid of a semi-trusted third party.

According to one or more embodiments of the present disclosure, example 16 provides a data processing apparatus for secure computation, where the secure computation is used for a first participant and a second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant, and the apparatus is applied to the first participant and includes:

a first determination module, configured to determine first permutation information and second permutation information according to the target matrix;
a first permutation module, configured to jointly perform a first round of secure permutation with the second participant at least according to the first permutation information to obtain a first permutation result shard of the target column vector;
a second permutation module, configured to jointly perform a second round of secure permutation with the second participant according to the first permutation result shard and the second permutation information to obtain a second permutation result shard;
a first generation module, configured to generate a first result shard of the product according to the second

## EP 4 607 843 A1

permutation result shard; and
a first execution module, configured to perform a target data processing task based on the first result shard.

According to one or more embodiments of the present disclosure, example 17 provides a data processing apparatus for secure computation, where the secure computation is used for a first participant and a second participant to collaboratively compute a product of an m*n target matrix and an n-dimensional target column vector, each column of the target matrix is an m-dimensional one-hot vector, each row of the target matrix includes a non-zero element, $m \leq n$, the target matrix is held by the first participant alone, and the target column vector is held by the second participant alone, or the target column vector is in a shared form for the first participant and the second participant, and the apparatus is applied to the second participant and includes:

a third permutation module, configured to jointly perform a first round of secure permutation with the first participant according to the target column vector or a second shard of the target column vector held by the second participant to obtain a fourth permutation result shard of the target column vector;
a fourth permutation module configured to jointly perform a second round of secure permutation with the first participant according to the fourth permutation result shard to obtain a third permutation result shard;
a second generation module, configured to generate a second result shard of the product according to the third permutation result shard; and
a second execution module, configured to perform a target data processing task based on the second result shard.

According to one or more embodiments of the present disclosure, example 18 provides a computer-readable medium having a computer program stored thereon, where the program, when executed by a processing device, implements the steps of the method of any one of examples 1-15.
According to one or more embodiments of the present disclosure, example 19 provides an electronic device, including:

a storage device having a computer program stored thereon; and
a processing device configured to execute the computer program in the storage device, to implement the steps of the method of any one of examples 1-15.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept, for example, a technical solution formed by exchanging the above features with technical features with similar functions disclosed in the present disclosure (but not limited to).
In addition, although operations are described in a specific order, this should not be understood as requiring these operations to be performed in the specific order shown or in a sequential order. Under certain circumstances, multitasking and parallel processing may be beneficial. Similarly, although several specific implementation details are included in the above discussion, these should not be interpreted as limiting the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.
Although the subject matter has been described in a language specific to structural features and/or logical actions of the method, it should be understood that the subject matter defined in the appended claims is not necessarily limited to the specific features or actions described above. On the contrary, the specific features and actions described above are only example forms for implementing the claims. Regarding the apparatuses in the above embodiments, the specific manner in which each module performs operations has been described in detail in the embodiments related to the method, which will not be described in detail here.

## Claims

1. A data processing method for secure computation, wherein the secure computation is used for a first participant and a second participant to collaboratively compute a product of an m*n target matrix and an n-dimensional target column vector, each column of the target matrix is an m-dimensional one-hot vector, each row of the target matrix comprises a non-zero element, $m \leq n$, the target matrix is held by the first participant alone, the target column vector is held by the second participant alone, or the target column vector is in a shared form for the first participant and the second participant, and the method is applied to the first participant and comprises:

> determining first permutation information and second permutation information according to the target matrix;
> jointly performing a first round of secure permutation with the second participant at least according to the first permutation information to obtain a first permutation result shard of the target column vector;
> jointly performing a second round of secure permutation with the second participant according to the first permutation result shard and the second permutation information to obtain a second permutation result shard;
> generating a first result shard of the product according to the second permutation result shard; and
> performing a target data processing task based on the first result shard.

2. The method according to claim 1, wherein determining the first permutation information and the second permutation information according to the target matrix comprises:

> obtaining a reference matrix and an n-order lower triangular matrix; and
> performing matrix decomposition on the target matrix according to the reference matrix and the n-order lower triangular matrix to obtain the reference matrix, a first permutation matrix, the n-order lower triangular matrix, and a second permutation matrix that are sequentially multiplied, wherein the first permutation matrix is a matrix representation of the first permutation information, and the second permutation matrix is a matrix representation of the second permutation information.

3. The method according to claim 1, wherein jointly performing the second round of secure permutation with the second participant according to the first permutation result shard and the second permutation information to obtain the second permutation result shard comprises:

> calculating a product of an n-order lower triangular matrix and the first permutation result shard to obtain a first matrix; and
> performing the second round of secure permutation with the second participant according to the first matrix and the second permutation information to obtain the second permutation result shard.

4. The method according to claim 1, wherein generating the first result shard of the product according to the second permutation result shard comprises:

> obtaining a reference matrix; and
> determining a product of the reference matrix and the second permutation result shard as the first result shard.

5. The method according to claim 1, wherein the target column vector is in a shared form for the first participant and the second participant; and
jointly performing the first round of secure permutation with the second participant at least according to the first permutation information to obtain the first permutation result shard of the target column vector comprises:
jointly performing the first round of secure permutation with the second participant according to the first permutation information and a first shard of the target column vector held by the first participant to obtain the first permutation result shard of the target column vector.

6. The method according to claim 1, wherein the target column vector is held by the second participant alone; and
jointly performing the first round of secure permutation with the second participant at least according to the first permutation information to obtain the first permutation result shard of the target column vector comprises:
jointly performing the first round of secure permutation with the second participant according to the first permutation information to obtain the first permutation result shard of the target column vector.

7. The method according to any one of claims 1-6, wherein the method further comprises:

> obtaining a second result shard of the product generated by the second participant, wherein the second result shard is generated based on a third permutation result shard, and the third permutation result shard is obtained when the second participant performs the second round of secure permutation; and
> determining a sum of the first result shard and the second result shard as the product of the target matrix and the target column vector.

8. The method according to any one of claims 1-6, wherein the method further comprises:

performing, in response to receiving the target data processing task, private set intersection on a first attribute column in a first data table and a second data table, with the second participant, to obtain a first table shard of an inner join result set of the first data table and the second data table, wherein the target data processing task comprises a Structured Query Language (SQL) statement, the SQL statement is used to perform, at least according to a second attribute column in a second table shard, grouping aggregation on the inner join result set according to a grouping field in the first table shard, the second table shard is a table shard of the inner join result set obtained by the second participant after the private set intersection, and the first data table and the second data table are held by the first participant and the second participant, respectively; and

generating the target matrix according to attribute values of the grouping field in the first table shard, wherein m is the number of categories of the attribute values of the grouping field in the first table shard, and n is the number of rows of the first table shard;

wherein the target column vector is generated at least according to the second attribute column.

9. The method according to any one of claims 1-6, wherein the first participant and the second participant jointly perform the first round of secure permutation and the second round of secure permutation with the aid of a semi-trusted third party.

10. A data processing method for secure computation, wherein the secure computation is used for a first participant and a second participant to collaboratively compute a product of an m*n target matrix and an n-dimensional target column vector, each column of the target matrix is an m-dimensional one-hot vector, each row of the target matrix comprises a non-zero element, $m \leq n$, the target matrix is held by the first participant alone, the target column vector is held by the second participant alone, or the target column vector is in a shared form for the first participant and the second participant, and the method is applied to the second participant and comprises:

jointly performing a first round of secure permutation with the first participant according to the target column vector or a second shard of the target column vector held by the second participant to obtain a fourth permutation result shard of the target column vector;

jointly performing a second round of secure permutation with the first participant according to the fourth permutation result shard to obtain a third permutation result shard;

generating a second result shard of the product according to the third permutation result shard; and

performing a target data processing task based on the second result shard.

11. The method according to claim 10, wherein jointly performing the second round of secure permutation with the first participant according to the fourth permutation result shard to obtain the third permutation result shard comprises:

calculating a product of an n-order lower triangular matrix and the fourth permutation result shard to obtain a second matrix; and

jointly performing the second round of secure permutation with the first participant according to the second matrix to obtain the third permutation result shard.

12. The method according to claim 10, wherein generating the second result shard according to the third permutation result shard comprises:

obtaining a reference matrix; and

determining a product of the reference matrix and the third permutation result shard as the second result shard.

13. The method according to any one of claims 10-12, wherein the method further comprises:

obtaining a first result shard of the product generated by the first participant, wherein the first result shard is generated based on a second permutation result shard, and the second permutation result shard is obtained when the first participant performs the second round of secure permutation; and

determining a sum of the first result shard and the second result shard as the product of the target matrix and the target column vector.

14. The method according to any one of claims 10-12, wherein the method further comprises:
performing, in response to receiving the target data processing task, private set intersection on a first attribute column in a first data table and a second data table, with the first participant, to obtain a second table shard of an inner join result set of the first data table and the second data table, wherein the target data processing task comprises a Structured Query Language (SQL) statement, the SQL statement is used to perform, at least according to a second attribute column in the second table shard, grouping aggregation on the inner join result set according to a grouping field in the first table shard, the first table shard is a table shard of the inner join result set obtained by the first participant after the private set intersection, the first data table and the second data table are held by the first participant and the second participant, respectively, and the target column vector is generated at least based on the second attribute column.

15. The method according to any one of claims 10-12, wherein the first participant and the second participant jointly perform the first round of secure permutation and the second round of secure permutation with the aid of a semi-trusted third party.

Determining first permutation information and second permutation information according to a target matrix —S101

Jointly performing the first round of secure permutation with the second participant at least according to the first permutation information to obtain the first permutation result shard of the target column vector —S102

Jointly performing the second round of secure permutation with the second participant according to the first permutation result shard and the second permutation information to obtain the second permutation result shard —S103

Generating the first result shard of the product according to the second permutation result shard —S104

Performing a target data processing task based on the first result shard —S105

FIG. 1

Jointly performing the first round of secure permutation with the first participant according to the target column vector or the second shard of the target column vector held by the second participant to obtain the fourth permutation result shard of the target column vector —S201

Jointly performing the second round of secure permutation with the first participant according to the fourth permutation result shard to obtain the third permutation result shard —S202

Generating the second result shard of the product according to the third permutation result shard —S203

Performing the target data processing task based on the second result shard —S204

FIG. 2

300

Data Processing Apparatus For
Secure Computation

First Determination Module — 301

First Permutation Module — 302

Second Permutation Module — 303

First Generation Module — 304

First Execution Module — 305

FIG. 3

400

Data Processing Apparatus For
Secure Computation

Third Permutation Module — 401

Fourth Permutation Module — 402

Second Generation Module — 403

Second Execution Module — 404

FIG. 4

| Processing Device | ⌐601 | ROM | ⌐602 | RAM | ⌐603 |

I/O interface ⌐605

| Input Device | Output Device | Storage Device | Communication Device |
| 606 | 607 | 608 | 609 |

⌐604

FIG. 5

## EUROPEAN SEARCH REPORT

Application Number

EP 24 21 8949

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 949 505 A (ALIPAY HANGZHOU TECH CO LTD) 18 January 2022 (2022-01-18) * pages 1,4-7,12-19 * | 1-15 | INV. H04L9/08 G06F17/16 |
| A | Harth Rafael: "Matrix operations in multi-party computation", , 1 January 2020 (2020-01-01), XP093278831, Retrieved from the Internet: URL:https://elib.uni-stuttgart.de/server/api/core/bitstreams/58cffa00-2ec0-44cc-9f23-77672d9d7f99/content * section 3.1, introduction; sections 3.1.1, 3.1.2 * | 1-15 | |
| A | BALLA SHASHANK ET AL: "HELiKs: HE Linear Algebra Kernels for Secure Inference", PROCEEDINGS OF THE SPECIAL INTEREST GROUP ON COMPUTER GRAPHICS AND INTERACTIVE TECHNIQUES CONFERENCE: ELECTRONIC THEATER, ACMPUB27, NEW YORK, NY, USA, 15 November 2023 (2023-11-15), pages 2306-2320, XP059370113, DOI: 10.1145/3576915.3623136 ISBN: 979-8-4007-0052-1 * section 4; figure 3 * | 1-15 | TECHNICAL FIELDS SEARCHED (IPC) H04L G06F |

The present search report has been drawn up for all claims

| Place of search | Date of completion of the search | Examiner |
|---|---|---|
| Munich | 21 May 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8949

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | Publication date | Patent family member(s) | Publication date |
|---|---|---|---|
| CN 113949505 A | 18-01-2022 | NONE | |

For more details about this annex : see Official Journal of the European Patent Office, No. 12/82